# EUROPÄISCHE PATENTSCHRIFT

(11) **EP 0 809 586 B1**
(45) Veröffentlichungstag und Bekanntmachung des Hinweises auf die Patenterteilung: **03.06.1998**
(21) Anmeldenummer: 96907286.7
(22) Anmeldetag: 27.03.1996
(51) Int. Cl.: B62J 9/00, B62J 7/08

(54) **HALTEVORRICHTUNG**
ATTACHMENT DEVICE
DISPOSITIF DE FIXATION

(30) Priorität: 13.03.1996 DE 19609692
(43) Veröffentlichungstag der Anmeldung: 03.12.1997
(73) Patentinhaber: GIES GmbH & Co. Kunststoffwerk KG, D-36272 Niederaula (DE)
(72) Erfinder: GIES, Jakob, D-36272 Niederaula (DE); GIES, Martin, D-36272 Niederaula (DE)
(74) Vertreter: WALTHER, WALTHER & HINZ Patentanwälte
(86) Internationale Anmeldenummer: DE9600533
(87) Internationale Veröffentlichungsnummer: WO9733786

(56) Entgegenhaltungen:
- DE-U- 9 413 276
- NL-A- 83 446
- NL-A- 8 201 395
- US-A- 4 325 531

## Beschreibung

Die Erfindung betrifft eine an einem Gepäckträger von Fahrrädern, Mopeds oder dergleichen befestigbare Haltevorrichtung für Körbe, Kästen oder dergleichen Behältnisse, wobei die Haltevorrichtung als auf den Gepäckträger auflegbare Platte ausgebildet ist, wobei Mittel zur Verbindung der Platte mit dem Gepäckträger vorgesehen sind.

Bei bisher bekannten Haltevorrichtungen wurden zu diesem Zweck mit gürtelendseitigen Haken versehene, gummielastische Bänder eingesetzt. Solche Haltevorrichtungen weisen jedoch den Nachteil auf, daß die Behältnisse am Gepäckträger nur umständlich befestigt und wieder gelöst werden können. Des weiteren besteht auch die Gefahr, daß sich die mit Gut beladenen Behältnisse während der Fahrt unbeabsichtigt von dem Gepäckträger lösen können.

Aus dem Stand der Technik gemäß der DE-U 94 13 276 ist darüber hinaus eine Haltevorrichtung der eingangs genannten Art bekannt. Diese Haltevorrichtung zeichnet sich im einzelnen durch ein gepäckträgerseitiges Grundelement und ein korbseitiges Adapterelement aus. Hierbei sind das gepäckträgerseitige Grundelement am Gepäckträger und das Adapterelement am Korb befestigbar. Das Grundelement und das Adapterelement sind durch eine Verriegelungseinrichtung miteinander verbindbar. Nachteilig hierbei ist insbesondere, daß der Korb, wenn er vom Gepäckträger genommen wird, immer das Adapterelement aufweist, was ein erhöhtes Gewicht des Korbes bedingt. Darüber hinaus ist auch immer nur ein bestimmter Korb auf dem Gepäckträger transportierbar, nämlich der, der das Adapterelement zeigt.

Der Erfindung liegt daher die Aufgabe zugrunde, eine Haltevorrichtung der eingangs genannten Art zu schaffen, mit der das Behältnis sicher und einfach an dem Gepäckträger festlegbar und von diesem wieder lösbar ist, ohne daß das Behältnis irgendwelche Zusatzeinrichtungen aufweist.

Diese Aufgabe wird nach der Erfindung dadurch gelöst, daß an der Oberseite der Platte wenigstens zwei hakenartige Fortsätze, Nasen oder dergleichen Halteelemente zur lösbaren Befestigung des Behältnisses angeordnet sind und wenigstens eines der Halteelemente aus einer Verriegelungsstellung gegen die Wirkung einer Vorspannung in eine Entriegelungsstellung überführbar ist. Mit einer solchermaßen augestalteten Haltevorrichtung ist ein sicheres Festlegen des Behältnisses an dem Gepäckträger möglich, wobei die haltenden Elemente entsprechende Laschen, Stege oder dergl. Ansätze des Behältnisses klammerartig umgreifen. Wenigstens eines der Halteelemente kann zum Lösen des Behältnisses von der Haltevorrichtung gegen die Wirkung einer Vorspannung von einer Verriegelungsstellung in eine Entriegelungsstellung überführt werden. Die Haltevorrichtung selbst ist mittels der Verbindungsmittel sicher und dauerhaft am Gepäckträger festlegbar. Vorteilhaft weist hierbei die Platte profilierte Abschnitte auf, wobei die Mittel zur Verbindung der Platte mit dem Gepäckträger an der Unterseite der Platte angeordnet sind.

Eine vorteilhafte Ausführungsform der Erfindung besteht darin, daß die Platte im wesentlichen eine rechteckige Form aufweist, zwei starre, insbesondere einstückig an der Platte angeformte Halteelemente in zwei benachbarten Eckbereichen an einer Seite der Platte angeordnet sind, und das unter Vorspannung stehende Halteelement in einem Mittelabschnitt im Bereich der gegenüberliegenden Seite der Platte gehalten ist. Durch diese Maßnahmen werden insbesondere die gegebenenfalls auf das unter Vorspannung stehende, in Verriegelungsstellung befindliche Halteelement wirkenden Zugkräfte weitestgehend minimiert, so daß auch bei extremen Kurvenfahrten oder einem Kippen des Fahrrades bzw. Mopeds ein unbeabsichtigtes Lösen des unter Vorspannung stehenden Halteelements nicht zu befürchten ist.

Eine, in konstruktiver Hinsicht besonders günstige Ausführungsform zeichnet sich dadurch aus, daß das unter Vorspannung stehende Halteelement einen Grundkörper 3 mit seitlich angeformten Leisten aufweist, der in einer Ausnehmung der Platte verschiebbar geführt ist, wobei die Leisten in zwischen der Unterseite der Platte und einem mit der Platte, beispielsweise durch Verschrauben, Verkleben oder dergl., verbundenen Rahmen gebildeten Aufnahmen gefangen sind. Das unter Vorspannung stehende Halteelement ist somit längs verschieblich und unverlierbar an der Platte geführt.

Nach einer anderen, vorteilhaften Weiterbildung der Erfindung weisen der Grundkörper sowie der Rahmen benachbarte, im Bereich der Unterseite angeordnete Forsätze zur Anbringung eines die Vorspannung erzeugenden federelastischen Elements auf. Dadurch, daß das federelastische Element im Bereich der Unterseite der Platte angeordnet ist, wird eine mögliche Gefahr der Verletzungen des Benutzers durch Klemmungen, Quetschungen oder dergl. weitestgehend minimiert.

Von Vorteil weist jeder der Fortsätze eine Sacklochbohrung oder dergl. auf, die im wesentlichen koaxial zueinander ausgerichtet sind und in denen jeweils ein endseitiger Abschnitt einer, insbesondere als Schraubenfeder ausgebildeten Druckfeder aufgenommen ist. Durch diese Druckfeder wird die Vorspannung für das verschiebbare Halteelement aufgebaut, wobei die Druckfeder unverlierbar in den Sacklochbohrungen der Fortsätze aufgenommen bzw. gesichert ist.

Von Vorteil weist das unter Vorspannung stehende Halteelement zwei eng beabstandete, nebeneinander angeordnete hakenartige Halteelemente auf. Durch diese Maßnahme wird dafür gesorgt, daß das Behältnis nicht in seitlicher Richtung verschiebbar sondern fixiert ist, indem beispielsweise zwischen die eng beabstandeten, nebeneinander angeordnete Halteelemente Stege, Widerlager oder dergl. des Behältnisses eingeführt werden.

Eine einfache Betätigung des unter Vorspannung stehenden Halteelements wird dadurch gewährleistet, daß der Grundkörper einen Stift, Bolzen, eine Taste oder dergl. Betätigungselement aufweist, das von der Platte seitlich nach außen hervorragt. Zum Lösen des Behältnisses von der Haltevorrichtung ist das Betätigungselement durch den Benutzer lediglich gegen die Vorspannung des federelastischen Elements zu verschieben, so daß das auf der Haltevorrichtung befindliche Behältnis dann von dieser gelöst werden kann.

Nach einer anderen, vorteilhaften Weiterbildung der Erfindung weist die Platte jeweils entlang einer Längsseite angeordnete, profilierte Abschnitte, insbesondere rinnenartige Einsenkungen mit Rechteck- oder Trapezprofil auf, die sich von einer Seite bis zu den Eckbereichen der Platte erstrecken. Zum einen sorgen diese profilierten Abschnitte für eine verbesserte Steifigkeit der Platte der Haltevorrichtung, zum anderen wird durch diese Maßnahme auf der Unterseite der Platte zwischen den rillenartigen Einsenkungen ein freier Raum zur Aufnahme des Grundkörpers, des Rahmens und des federelastischen Elements geschaffen, so daß eine freie Verschiebbarkeit des unter Vorspannung stehenden Haltelements gewährleistet ist.

Nach einem weiteren, vorteilhaften Merkmal der Erfindung sind einem Mittellängsbereich der Platte, insbesondere zwei langlochartige Ausnehmungen angeordnet. Hierdurch wird insbesondere das Gewicht der Haltevorrichtung ohne wesentliche Einbußen der Steifigkeit der Platte reduziert.

Von Vorteil sind die Mittel zur Verbindung der Platte mit dem Gepäckträger als mit der Platte verschraubbare Schlaufen, Klammern oder dergl. Elemente ausgebildet, welche Streben des Gepäckträgers umgreifen. Von Vorteil kommen als derartige Elemente handelsüblich erhältliche Kabelschellen bzw. -halter aus Kunststoff oder dergl. zur Anwendung.

Die Platte der Haltevorrichtung, das verschiebbare Halteelement wie auch der Rahmen werden bevorzugt in Kunststoff-Spritzgußtechnik hergestellt. Insgesamt sind nur wenige Teile zur Herstellung der erfindungsgemäßen Haltevorrichtung erforderlich, wodurch diese Haltevorrichtung mit geringem Fertigungsaufwand herstellbar ist.

Weitere Ziele, Merkmale, Vorteile und Aufwendungs- möglichkeiten der vorliegenden Erfindung ergeben sich aus der nachfolgenden Beschreibung eines Ausführungsbeispiels. Dabei bilden alle beschriebenen und/oder bildlich dargestellten Merkmal für sich oder in beliebiger sinnvoller Kombination den Gegenstand vorliegender Erfindung, auch unabhängig von ihrer Zusammenfassung in den Ansprüchen oder deren Rückbezichung.

Es zeigen:

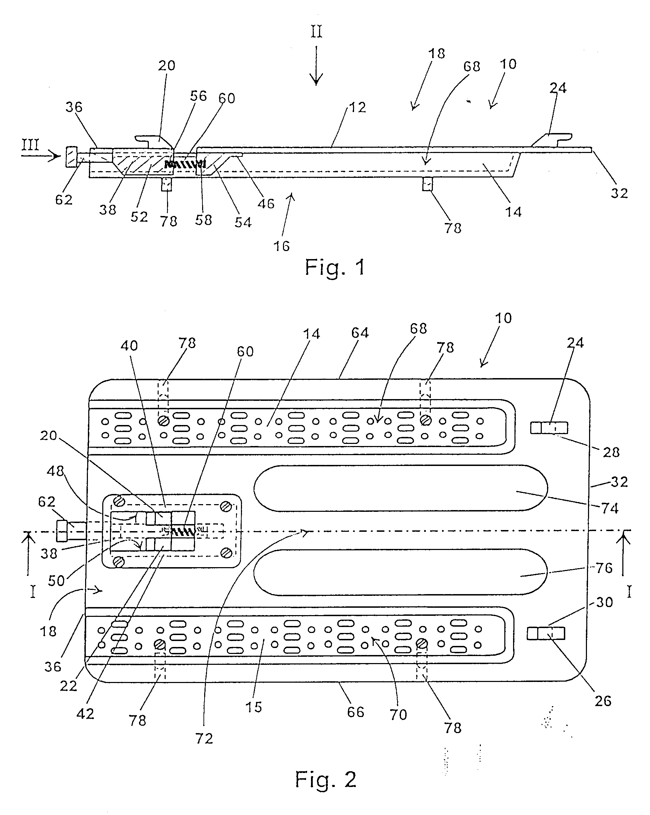

- Figur 1: einen Ausführungsbeispiel der Erfindung entlang der Schnittlinie I-I der Figur 2,
- Figur 2: eine Draufsicht der Haltevorrichtung der Figur 1 in Sicht des Pfeiles II und

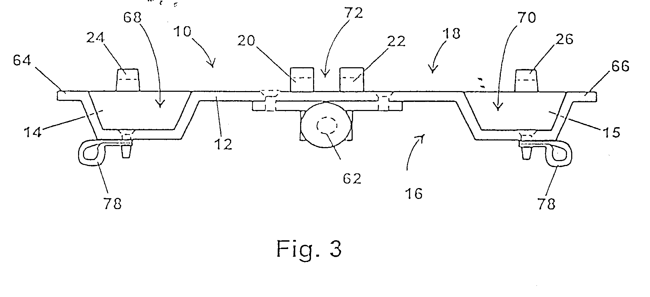

- Figur 3: eine Ansicht der Haltevorrichtung der Figur 1 in Sicht des Pfeiles III.

In den Figuren ist eine an einem Gepäckträger von Fahrrädern, Mopeds oder dergleichen befestigbare Haltevorrichtung 10 für Körbe, Kästen oder dergleichen Behältnisse dargestellt. Die Haltevorrichtung 10 ist als auf den Gepäckträger auflegbare, insbesondere profilierte Abschnitte 14, 15 aufweisende Platte 12 ausgebildet. An der Unterseite 16 der Platte 12 sind Mittel zur Verbindung der Platte 12 mit dem Gepäckträger vorgesehen. Auf der Oberseite 18 der Platte 12 sind wenigstens zwei, als hakenartige Fortsätze, Nasen oder dergl. ausgebildete Halteelemente 20, 22, 24, 26 zur lösbaren Befestigung des Behältnisses angeordnet. Wenigstens eines der Halteelemente 20, 22 ist aus einer Verriegelungsstellung gegen die Wirkung einer Vorspannung in eine Entriegelungsstellung überführbar. Die Platte 12 weist im wesentlichen eine Rechteckform auf, wobei zwei starre, insbesondere einstückig an der Platte 12 angeformte Halteelemente 24, 26 in zwei benachbarten Eckbereichen 28, 30 an einer Seite 32 der Platte 12 angeordent sind. Das unter Vorspannung stehende Halteelement 20, 22 ist in einem Mittelabschnitt 34 im Bereich der gegenüberliegenden Seite 36 der Platte 12 gehalten.

Das unter Vorspannung stehende Halteelement 20, 22 weist einen Grundkörper 38 mit seitlich angeformten Leisten 40, 42 auf. Der Grundkörper 38 ist in einer Ausnehmung 44 der Platte 12 verschiebbar geführt. Dabei sind die Leisten 40, 42, in zwischen der Unterseite 16 der Platte 12 und einem mit der Platte 12 durch Schrauben, Kleben oder dergl. verbundenen Rahmen 46 gebildeten Aufnahmen 48, 50 gefangen.

Der Grundkörper 38 wie auch der Rahmen 46 weisen des weiteren benachbarte, im Bereich der Unterseite 16 angeordnete Fortsätze 52, 54 zur Anbringung eines die Vorspannung erzeugenden federelastischen Elements auf. Jeder der Fortsätze 52, 54 ist hierzu mit einer Sacklochbohrung 56, 58 versehen, die im wesentlichen koaxial zueinander ausgerichtet sind und in denen jeweils ein endseitiger Abschnitt einer als Schraubenfeder ausgebildeten Druckfeder 60 aufgenommen ist. An dem verschiebbar an der Platte 12 aufgenommenen Grundkörper 38 sind zwei eng beabstandete, nebeneinander angeordnete hakenartige Halteelemente 20, 22 vorgesehen. Weiterhin weist der Grundkörper 38 einen Stift, Bolzen oder eine Taste als Betätigungselement 62 auf, wobei dieses Betätigungselement 62 von der Platte 12 seitlich nach außen hervorragt.

Die Platte 12 besitzt jeweils entlang einer Längsseite 64, 66 angeordnete, profilierte Abschnitte 14, 15, die als rinnenartige Einsenkungen 68, 70 mit Rechteck- bzw. Trapezprofil ausgebildet sind. Die Abschnitte 14, 15 erstrecken sich von der Seite 36 bis zu den Eckbereichen 28, 30 der Platte 12. In einem Mittellängesbereich 72 der Platte 12 sind zwei langlochartige Ausnehmungen 74, 76 angeordnet.

Als Mittel zur Verbindung der Platte 12 mit dem Gepäckträger werden bevorzugt mit der Platte 12 verschraubbare Schlaufen 78, Klammern oder dergl. Elemente eingesetzt, welche die Streben des Gepäckträgers umgreifen.

## Patentansprüche

1. An einem Gepäckträger von Fahrrädern, Mopeds oder dergl. befestigbare Haltevorrichtung (10) für Körbe, Kästen oder dergl. Behältnisse, wobei die Haltevorrichtung (10) als auf den Gepäckträger auflegbare Platte ausgebildet ist und wobei Mittel (4) zur Verbindung der Platte (12) mit dem Gepäckträger vorgesehen sind,
**dadurch gekennzeichnet**, daß
an der Oberseite (18) der Platte (12) wenigstens zwei hakenartige Fortsätze, Nasen oder dergl. Halteelemente (20, 22, 24, 26) zur lösbaren Befestigung des Behältnisses angeordnet sind und wenigstens eines der Halteelemente (20, 22,) aus einer Verriegelungsstellung gegen die Wirkung einer Vorspannung in eine Entriegelungsstellung überführbar ist.

2. Haltevorrichtung nach Anspruch 1,
**dadurch gekennzeichnet**, daß
die Platte (12) im wesentlichen eine rechteckige Form aufweist, zwei starre, insbesondere einstückig an der Platte (12) angeformte Halteelemente (24, 26) in zwei benachbarten Eckbereichen (28, 30) an einer Seite (32) der Platte (12) angeordnet sind und das unter Vorspannung stehende Halteelement (20, 22) in einem Mittelabschnitt (34) im Bereich der gegenüberliegenden Seite (3) der Platte (12) gehalten ist.

3. Haltevorrichtung nach einem der vorhergehenden Ansprüche,
**dadurch gekennzeichnet**, daß
das unter Vorspannung stehende Halteelement (20, 22) einen Grundkörper (38) mit seitlich angeformten bzw. ausgebildeten Leisten (40, 42) oder dergl. aufweist, der in einer Ausnehmung (44) der Platte (12) verschiebbar geführt ist, wobei die Leisten (40, 42) in, zwischen der Unterseite (16) der Platte (12) und einem mit der Platte (12), beispielsweise durch Verschrauben, Verkleben oder dergl., Verfahren verbundenen Rahmen (46) gebildeten Aufnahmen (48, 50) gefangen sind.

4. Haltevorrichtung nach Anspruch 3,
**dadurch gekennzeichnet**, daß
der Grundkörper (38) sowie der Rahmen (46) benachbarte, im Bereich der Unterseite (16) angeordnete Fortsätze (52, 54) oder dergl. zur Anbringung eines die Vorspannung erzeugenden federelastischen Elements aufweisen.

5. Haltevorrichtung nach Anspruch 4,
**dadurch gekennzeichnet**, daß
jeder der Fortsätze (52, 54) eine Sacklochbohrung (56, 58) oder dergl. aufweist, die im wesentlichen koaxial zueinander ausgerichtet sind und in denen jeweils ein endseitiger Abschnitt einer, insbesondere als Schraubenfeder ausgebildeten Druckfeder (60) aufgenommen ist.

6. Haltevorrichtung nach einem der vorhergehenden Ansprüche,
**dadurch gekennzeichnet**, daß
das unter Vorspannung stehende Halteelement (20, 22) zwei eng beabstandete, nebeneinander angeordnete, hakenartige Halteelemente (20, 22) aufweist.

7. Haltevorrichtung nach einem der Ansprüche 3 bis 6,
**dadurch gekennzeichnet**, daß
der Grundkörper einen Stift, Bolzen, eine Taste oder dergl. Betätigungselemente (62) aufweist, das von der Platte (12) insbesondere nach außen seitlich hervorragt.

8. Haltevorrichtung nach einem der vorhergehenden Ansprüche,
**dadurch gekennzeichnet**, daß
die Platte (12) jeweils entlang einer Längsseite (64, 66) angeordnete, profilierte Abschnitte (14, 15), insbesondere rinnenartige Einsenkungen (68, 70) mit Rechteck- oder Trapezprofil aufweist, die sich von einer Seite (36) bis zu den Eckbereichen (28, 30) der Platte (12) erstrecken.

9. Haltevorrichtung nach einem der vorhergehenden Ansprüche,
**dadurch gekennzeichnet**, daß
in einem Mittellängsbereich (72) der Platte (12), insbesondere zwei langlochartige Ausnehmungen (74, 76) angeordnet sind.

10. Haltevorrichtung nach einem der vorhergehenden Ansprüche,
**dadurch gekennzeichnet**, daß
die Mittel zur Verbindung der Platte (12) mit dem Gepäckträger als mit der Platte (12) verschraubbare Schlaufen (78), Klammern oder dergl. Elemente ausgebildet sind, welche Streben des Gepäckträgers umgreifen.

11. Haltevorrichtung nach Anspruch 1,
**dadurch gekennzeichnet**, daß
die Platte (12) profilierte Abschnitte (14, 15) aufweist.

12. Haltevorrichtung nach Anspruch 1,
**dadurch gekennzeichnet**, daß
die Mittel (4) zur Verbindung der Platte (12) mit dem Gepäckträger an der Unterseite der Platte (12) angeordnet sind.

## Claims

1. Holding device (10) for baskets, boxes, or the like containers, which device (10) can be fastened onto a luggage carrier of bicycles, motorbikes or the like, the holding device (10) being designed as a plate which can be laid onto the luggage carrier and whereas means (4) for connecting said plate (12) to the luggage carrier are provided,
**characterized in that** the upper side (18) of the plate (12) has at least two hook-like extensions, noses or like holding elements (20, 22, 24, 26) for detachable fastening of the container and that at least one of the holding elements (20, 22) can be transferred from a locking position, against the action of a preload, into a releasing position.

2. Holding device according to claim 1,
**characterized in that** the plate (12) has got an essentially rectangular shape, that two rigid holding elements (24, 26) being integral parts of the plate (12) are accomodated on one side (32) of the plate in two adjacent corner areas (28, 30) and that the preloaded holding element (20, 22) is held in a central section (34) in the area of the opposite side (3) of the plate (12).

3. Holding device according to one of the previous claims,
**characterized in that** the preloaded holding element (20, 22) is provided with a basic body (38) with lateral integrated rails (40, 42), said body being movably guided in a recess (44) of the plate (12), whereas the rails (40, 42) are confined in receptacles (48, 50) provided between the underside (16) of the plate (12) and a frame (46) connected with the plate (12) by means of screwing, gluing or the like.

4. Holding device according to claim 3,
**characterized in that** the basic body (38) as well as the frame (46) are provided with adjacent extensions (52, 54) accomodated in the area of the underside (16) onto which an elastic element producing the preload is arranged.

5. Holding device according to claim 4,
**characterized in that** each extension (52, 54) is advantageously provided with a blind hole boring (56, 58) or the like, these borings being essentially coaxially aligned and receiving each the end part of a pressure spring (60) designed particularly as a coil spring.

6. Holding device according to one of the previous claims,
**characterized in that** the preloaded holding element (20, 22) is provided with two hook-like holding elements (20, 22) being positioned side by side at short distance.

7. Holding device according to one of the claims 3 to 6,
**characterized in that** the basic body has been provided with a pin, a bolt, a key or a like operating element (62), said element projecting laterally from the plate (12).

8. Holding device according to one of the previous claims,
**characterized in that** the plate (12) is provided alongside each of its longitudinal sides (64, 66) with profiled sections (14, 15), more particularly with groove-like hollows (68, 70) having a rectangular or trapezoid profile and extending from one side (36) up to the corner areas (28, 30) of the plate (12).

9. Holding device according to one of the previous claims,
**characterized in that** two long-hole recesses (74, 76) are arranged in a medium longitudinal area (72) of the plate (12).

10. Holding device according to one of the previous claims,
**characterized in that** the means for connecting the plate (12) with the luggage carrier are designed as loops (78), clamps or the like elements being screwable with the plate (12), said elements encompassing braces of the luggage carrier.

11. Holding device according to claim 1,
**characterized in that** the plate (12) has profiled sections (14, 15).

12. Holding device according to claim 1,
**characterized in that** the means (4) for connecting the plate (12) with the luggage carrier are accomodated on the underside of the plate (12).

## Revendications

1. Mécanisme de retenue (10) pour corbeilles, boîtes ou autres récipients du même genre pouvant être fixé au porte-bagages de bicyclettes, de vélomoteurs ou autres, ledit mécanisme de retenue (10) étant conçu comme une plaque posée sur le porte-bagages, des moyens (4) pour relier la plaque (12) au porte-bagages étant prévus,
**caractérisé en ce que** au moins deux extensions, mentonnets ou autres éléments de retenue (20, 22, 24, 26) en forme de crochet permettant d'attacher le récipient de façon amovible sont disposés sur le côté supérieur (18) de la plaque (12), et que au moins un des éléments de retenue (20, 22) est transférable, à l'encontre de l'effet exercé par la prétension, d'une position de verrouillage à une position de déverrouillage.

2. Mécanisme de retenue selon la revendication 1,
**caractérisée en ce que** la plaque (12) a une forme essentiellement rectangulaire, que deux éléments de retenue (24, 26) rigides, intégrés dans la plaque (12) sont situés dans deux coins voisins (28, 30) sur un côté (32) de la plaque (12), et que l'élément de retenue sous prétension (20, 22) est maintenu dans une section centrale (34) dans la région du côté opposé (3) de la plaque (12).

3. Mécanisme de retenue selon l'une des revendications précédentes,
**caractérisé en ce que** l'élément de retenue sous prétension (20, 22) est pourvu d'un corps de base (38) ayant des baguettes (40, 42) latérales intégrées et étant guidé de façon mobile dans un évidement (44) de la plaque (12), les baguettes (40, 42) se trouvant confinées dans des logements (48, 50) prévus entre le côté inférieur (16) de la plaque (12) et un cadre (46) relié à la plaque (12) par des vis, de la colle ou un autre moyen.

4. Mécanisme de retenue selon la revendication 3,
**caractérisé en ce que** le corps de base (38) ainsi que le cadre (46) sont pourvus d'extensions (52, 54) ou d'autres éléments placés dans la région du côté inférieur (16) et servant de logement à l'élément élastique établissant la prétension.

5. Mécanisme de retenue selon la revendication 4,
**caractérisé en ce que** chacune des extensions (52, 54) est pourvue d'un trou borgne (56, 58) ou autre, ces trous étant alignés de façon essentiellement coaxiale, et recevant chacun une extrémité d'un ressort de compression (60) sous forme plus particulière d'un ressort hélicoïdal.

6. Mécanisme de retenue selon l'une des revendications précédentes,
**caractérisé en ce que** l'élément de retenue sous prétension (20, 22) est pourvu de deux éléments de retenue en forme de crochet (20, 22) disposés très près l'un à côté de l'autre.

7. Mécanisme de retenue selon l'une des revendications 3 à 6,
**caractérisé en ce que** le corps de base est pourvu d'une tige, d'un boulon, d'une touche ou d'un autre élément de commande (62) faisant saillie sur le côté de la plaque (12).

8. Mécanisme de retenue selon l'une des revendications précédentes,
**caractérsé en ce que** la plaque (12) est pourvue sur chacun de ses côtés longitudinaux (64, 66) de sections profilées (14, 15), plus particulièrement de renfoncements sous forme de rainures (68, 70) au profil rectangulaire ou trapézoïdal et s'étendant d'un côté (36) jusqu'aux recoins (28, 30) de la plaque (12).

9. Mécanisme de retenue selon l'une des revendications précédentes,
**caractérisé en ce que** deux évidements sous forme de trous oblongs (74, 76) sont prévus dans la section longitudinale centrale (72) de la plaque (12).

10. Mécanisme de retenue selon l'une des revendications précédentes,
**caractérisé en ce que** les moyens permettant de relier la plaque (12) au porte-bagages sont conçus comme des boucles (78), des crampons ou autres éléments pouvant être vissés à la plaque (12) et étreignant les traverses du porte-bagages.

11. Mécanisme de retenue selon la revendication 1,
**caractérisé en ce que** la plaque (12) est pourvue de sections profilées (14, 15).

12. Mécanisme de retenue selon la revendication 1,
**caractérisé en ce que** les moyens (4) pour relier la plaque (12) au porte-bagages sont placés sur le côté inférieur de la plaque (12).
